# FASCICULE DE BREVET EUROPEEN

(11) **EP 1 128 977 B1**
(45) Date de publication et mention de la délivrance du brevet: **19.02.2003**
(21) Numéro de dépôt: 99972164.0
(22) Date de dépôt: 12.11.1999
(51) Int. Cl.: B60K 41/06, F16H 61/04

(54) **PROCEDE DE COMMANDE DU COUPLE MOTEUR PENDANT LES CHANGEMENTS DE VITESSE**
VERFAHREN ZUR STEUERUNG DES MOTORDREHMOMENTS WÄHREND EINES SCHALTVORGANGES
METHOD FOR CONTROLLING ENGINE TORQUE WHEN SHIFTING GEARS

(30) Priorité: 12.11.1998 FR 9814220
(43) Date de publication de la demande: 05.09.2001
(73) Titulaire: Renault s.a.s., 92100 Boulogne Billancourt (FR); AUTOMOBILES PEUGEOT, 75116 Paris (FR); AUTOMOBILES CITROEN, 92200 Neuilly-sur-Seine (FR)
(72) Inventeur: TAFFIN, Christian, F-92380 Garches (FR); ARBONA, Jean-Pierre, F-78630 Bures-Morainvilliers (FR)
(74) Mandataire: Kohn, Philippe
(86) Numéro de dépôt international: FR9902779
(87) Numéro de publication internationale: WO00029244

(56) Documents cités:
- EP-A- 0 278 856
- EP-A- 0 536 759
- EP-A- 0 774 374
- DE-A- 3 735 246

## Description

L'invention concerne un véhicule automobile comportant des moyens perfectionnés pour assurer la gestion des changements de rapport d'une boîte de vitesses à changements de rapports automatisés.

L'invention se rapporte plus particulièrement à un véhicule automobile comportant une boîte de vitesses à changements de rapports automatisés, du type comportant une unité de commande de la boîte de vitesses et une unité de pilotage du moteur, du type dans lequel l'unité de pilotage reçoit, par l'intermédiaire d'une pédale d'accélérateur, une information représentative de la demande de couple du conducteur en fonction de laquelle elle est susceptible de commander le fonctionnement du moteur, du type dans lequel le moteur est susceptible de fournir des informations à l'unité de commande de la boîte, et du type dans lequel le pilotage du moteur est susceptible d'être modifié en fonction d'informations transmises par l'unité de commande de la boîte à l'unité de pilotage du moteur.

Dans les véhicules équipés d'une boîte de vitesses purement mécanique, dans laquelle la boîte de vitesses à rapports étagés est reliée au moteur par un embrayage à friction et dans laquelle le conducteur effectue lui-même la sélection et l'engagement des rapports par l'intermédiaire d'un levier de vitesses, c'est le conducteur qui doit gérer au mieux le passage des vitesses de manière à ce que celui-ci se fasse sans aucun à-coup.

Pour cela, il maîtrise d'une part le régime moteur grâce à la pédale d'accélérateur et, d'autre part, la progressivité du débrayage et de l'embrayage par son action sur la pédale d'embrayage.

Depuis de nombreuses années déjà, il existe des boîtes de vitesses à changements de rapports automatisés. Dans cette catégorie, on retrouve notamment les boîtes automatiques classiques dans lesquelles différents trains épicycloïdaux permettent de définir des rapports étagés prédéterminés, la sélection des rapports se faisant en actionnant différents freins ou embrayages qui permettent d'immobiliser sélectivement certains des composants du (ou des) train(s) épicycloïdal(aux) de manière à déterminer un rapport de vitesse entre l'arbre de sortie et l'arbre d'entrée de la boîte de vitesses. Une telle boite de vitesse automatique est connue de EP 278 856 A qui montre les caractéristiques du préambule de la revendication 1.

Un autre type de boîte de vitesses à changements de rapports automatisés est constitué par les boîtes de vitesses mécaniques classiques, à crabots, dans lesquelles la sélection et l'engagement des rapports ne sont plus assurés directement par le conducteur au moyen d'un levier, mais par des vérins gérés par une unité de commande. Ces vérins peuvent n'intervenir qu'à la sollicitation expresse du conducteur, auquel cas ce dernier reste entièrement maître de l'instant du changement de rapport, ou au contraire de manière automatique, sous le contrôle de l'unité de commande, en fonction de paramètres analogues à ceux utilisés pour déterminer les instants de changement de rapport dans une boîte automatique classique.

Une telle boîte de vitesses sera appelée dans la suite du texte boîte de vitesses robotisée.

Par ailleurs, on verra que certains aspects de l'invention pourront également être appliqués à des boîtes de vitesses ne comportant pas des rapports étagés, telles que les boîtes de vitesses à courroie à variation continue de rapport.

Notamment dans le cas des boîtes de vitesses à rapports étagés et à changements automatisés, il est apparu qu'une très bonne de maîtrise de la phase de changement de rapport était primordiale pour une conduite agréable du véhicule et pour le confort des passagers. Un tel agrément et un tel confort ne peuvent être obtenus qu'en supprimant complètement les à-coups susceptibles de survenir au cours du changement de rapport. Or, notamment dans les boîtes automatiques classiques et dans les boîtes de vitesses robotisées, il est nécessaire, au cours du changement de rapport, d'accoupler et de désaccoupler des organes à friction par lesquels la puissance motrice du moteur est transmise aux roues du véhicule. L'ouverture et la fermeture de ces accouplements à friction supposent des phases transitoires qui sont très difficiles à maîtriser parfaitement du fait que ce sont des phases de glissement de deux éléments l'un par rapport à l'autre.

Ces problèmes sont notamment accrus lorsque ce n'est pas le conducteur qui décide de l'instant du changement de rapport, car, dans ce cas, il maintient généralement la pédale d'accélérateur enfoncée si bien que le passage peut se faire alors que le moteur délivre un couple relativement important.

Pour pallier à cet inconvénient, il est déjà connu de prévoir que, au cours du changement de rapport, le moteur soit piloté pour ne fournir qu'une partie seulement du couple demandé par le conducteur, par exemple en réduisant cette demande d'un pourcentage fixe.

Cette solution ne permet toutefois pas d'obtenir des résultats entièrement satisfaisants dans tous les cas, notamment lorsque, au cours du changement de rapport, la demande de couple exprimée par le conducteur varie fortement.

L'invention a donc pour objet de proposer une nouvelle architecture pour un véhicule automobile dans laquelle, pour aboutir à des changements de rapport les plus fluides possibles, les impératifs liés à la boîte de vitesses peuvent prendre le pas sur ceux imposés par le conducteur.

Dans ce but, l'invention propose un véhicule automobile du type décrit précédemment, caractérisé en ce que, pour certaines phases de fonctionnement du véhicule, l'unité de commande de la boîte de vitesses inhibe l'action de l'information de demande de couple à laquelle elle substitue un ordre de pilotage moteur auquel l'unité de pilotage du moteur est subordonnée.

Selon d'autres caractéristiques de l'invention :
- lors du passage d'un ancien rapport de vitesses à un nouveau rapport de vitesses inférieur, l'unité de commande de la boîte transmet à l'unité de pilotage du moteur un ordre de pilotage selon lequel le moteur est piloté pour suivre une courbe de variation de régime déterminée ;
- les rapports de la boîte de vitesses sont déterminés par l'état ouvert ou fermé d'accouplements à friction, la boîte de vitesses est reliée au moteur par un convertisseur de couple hydraulique, et lors du passage d'un ancien rapport de vitesses à un nouveau rapport de vitesses inférieur, l'unité de commande de la boîte transmet à l'unité de pilotage du moteur un ordre de pilotage selon lequel le moteur est piloté pour qu'un arbre d'entrée de la boîte de vitesse suive une courbe de variation de régime déterminée ;
- les rapports de la boîte de vitesses sont déterminés par l'état ouvert ou fermé d'accouplements à friction, la boîte de vitesses est reliée au moteur par un convertisseur de couple hydraulique, lors du passage d'un ancien rapport de vitesses à un nouveau rapport de vitesses supérieur, l'unité de commande de la boîte transmet à l'unité de pilotage du moteur, pendant une étape de détection d'accrochage du nouveau rapport, un ordre de pilotage selon lequel le moteur est piloté pour fournir un couple de détection d'accrochage ;
- l'accrochage est détecté lorsqu'il est mesuré une amorce de chute de la vitesse de rotation d'un arbre d'entrée de la boîte de vitesses ;
- le couple de détection d'accrochage est un couple constant ;
- lors du passage d'un ancien rapport de vitesses à un nouveau rapport de vitesses supérieur, l'unité de commande de la boîte transmet à l'unité de pilotage du moteur, pendant une étape de décroissance du régime moteur, un ordre de pilotage selon lequel le moteur est piloté pour fournir un couple de décroissance du régime moteur ;
- le couple de décroissance du régime moteur est déterminé par l'unité de commande pour que la durée de l'étape de décroissance du régime moteur soit sensiblement égale à une durée prédéterminée ;
- l'étape de décroissance du régime moteur commence lorsque l'accrochage du nouveau rapport est détecté ;
- la valeur du couple de décroissance du régime moteur est une valeur constante pendant l'étape de décroissance du régime moteur ;
- la valeur du couple de décroissance du régime moteur est une valeur qui évolue pendant l'étape de décroissance du régime moteur en fonction du couple demandé par le conducteur ;
- la valeur du couple de décroissance du régime moteur est une valeur qui dépend du niveau de couple demandé par le conducteur ;
- l'unité de commande de la boîte de vitesses reçoit l'information de demande de couple fournie par la pédale d'accélérateur, l'information de demande de couple est comparée par l'unité de commande à une valeur de couple maximum, et lorsque la demande de couple reste supérieure à la valeur de couple maximum pendant une durée prédéterminée, l'unité de commande de la boîte transmet à l'unité de pilotage du moteur un ordre de pilotage selon lequel le moteur est piloté pour fournir un couple égal à la valeur de couple maximum ;
- l'unité de commande de la boîte de vitesses reçoit l'information de demande de couple fournie par la pédale d'accélérateur, l'information de demande de couple est comparée par l'unité de commande à une valeur de couple maximum, et lorsque la demande de couple devient supérieure à la valeur de couple maximum, l'unité de commande de la boîte transmet à l'unité de pilotage du moteur un ordre de pilotage selon lequel le moteur est piloté pour fournir un couple égal à la valeur de couple maximum sauf dans le cas d'une augmentation soudaine de la demande de couple ;
- dans le cas d'une augmentation soudaine de la demande de couple au cours de laquelle la demande de couple devient supérieure à la valeur de couple maximum, l'unité de commande de la boîte transmet à l'unité de pilotage du moteur un ordre de pilotage selon lequel le moteur est piloté pour fournir un couple supérieur à la valeur de couple maximum, et si, après une durée prédéterminée, la demande de couple reste supérieure à la valeur de couple maximum, l'unité de commande de la boîte transmet à l'unité de pilotage du moteur un nouvel ordre de pilotage selon lequel le moteur est piloté pour fournir un couple égal à la valeur de couple maximum ;
- la valeur de couple maximum correspond à un couple maximum admissible par un organe de transmission du véhicule ;
- la boîte de vitesses est reliée au moteur par un convertisseur de couple hydraulique susceptible d'être ponté, et lors du pontage du convertisseur, l'unité de commande de la boîte de vitesse envoie à l'unité de pilotage du moteur un ordre de pilotage selon lequel il ne peut délivrer un couple supérieur à un couple maximum de pontage ;
- les rapports de la boîte de vitesses sont déterminés par l'état ouvert ou fermé d'accouplements à friction, et lors de l'engagement d'un rapport, l'unité de commande de la boîte de vitesse envoie à l'unité de pilotage du moteur un ordre de pilotage selon lequel il ne peut délivrer un couple supérieur à un couple maximum d'engagement.

D'autres caractéristiques et avantages de l'invention apparaîtront à la lecture de la description détaillée qui suit pour la compréhension de laquelle on se reportera aux dessins annexés dans lesquels :
- la figure 1 est un diagramme schématique illustrant différents composants de la chaîne de traction d'un véhicule automobile ainsi que les unités de pilotage et de commande respectivement du moteur et de la boîte de vitesses ;
- la figure 2 est un diagramme dans lequel on a illustré, en fonction du temps, le couple demandé par le conducteur, le couple fourni par le moteur et la vitesse de rotation du moteur lors d'un changement de rapport montant, d'un rapport inférieur à un rapport supérieur, dans un véhicule automobile conforme aux enseignements de l'invention ;
- la figure 3 est un diagramme similaire à celui de la figure 2 lors d'un changement de rapport depuis un rapport supérieur vers un rapport inférieur, c'est-à-dire lors d'un rétrogradage ;
- les figures 4 et 6 sont des diagrammes illustrant le couple moteur en fonction du temps dans le cas d'une boîte de vitesses dont l'unité de commande peut limiter le couple fourni par le moteur en fonction de paramètres liés à la boîte de vitesses ; et
- la figure 5 est un organigramme du déroulement du processus de détermination de la consigne de couple fournie au moteur dans un véhicule selon l'invention.

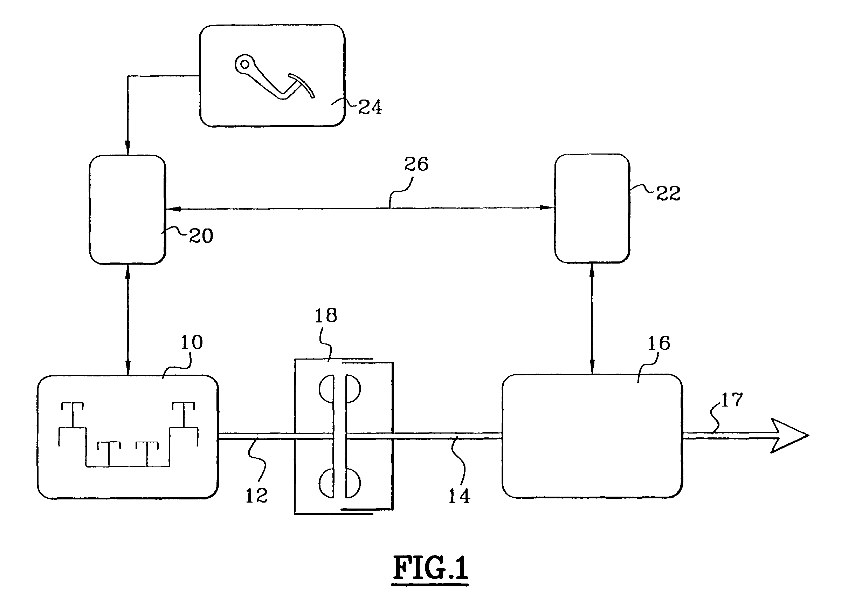

On a illustré sur la figure 1 une partie de la chaîne de traction d'un véhicule automobile. Cette chaîne de traction comporte notamment un moteur 10 dont l'arbre de sortie 12 permet l'entraînement en rotation d'un arbre d'entrée 14 d'une boîte de vitesses 16, par l'intermédiaire d'un organe de liaison 18. L'arbre de sortie 17 de la boîte de vitesses est susceptible d'entraîner en rotation des roues motrices (non représentées) du véhicule, éventuellement par l'intermédiaire de divers organes de transmission (non représentés) tels qu'un différentiel.

Le moteur 10 peut être un moteur thermique, un moteur électrique, un moteur hybride, une turbine, etc.

La boîte de vitesses 16 est une boîte de vitesses à changements de rapports automatisés. De manière générale, il s'agit d'une boîte de vitesses à rapports étagés, telle qu'une boîte automatique classique à trains épicycloïdaux ou d'une boîte de vitesses robotisée.

Toutefois, certains aspects de l'invention pourront être appliqués au cas d'une boîte de vitesses à variation continue de rapport telle qu'une boîte de vitesses à courroie et à poulie.

Lorsque la boîte de vitesses 16 est une boîte de vitesses automatique classique, l'organe de liaison 18 est le plus souvent un convertisseur de couple hydraulique.

Lorsque la boîte de vitesses 16 est une boîte de vitesses robotisée, l'organe de liaison 18 est généralement un embrayage à friction.

Comme on l'a représenté sur la figure 1, le moteur 10 est piloté par une unité de pilotage 20 et la boîte de vitesses 16 comporte une unité de commande 22. De manière classique, le conducteur du véhicule dispose d'un organe d'interface, tel qu'une pédale d'accélérateur 24, sur lequel il agit pour commander le moteur 10 afin que ce dernier fournisse un certain couple dans le but d'obtenir une accélération ou une décélération du véhicule, ou de maintenir le véhicule à une vitesse relativement constante.

De préférence, pour la mise en oeuvre de l'invention, l'information de demande de couple fournie par la pédale d'accélérateur 24 sera une information de type électrique et non une information de type purement mécanique. Pour cela, la pédale d'accélérateur 24 est couplée à un détecteur de position (non représenté) qui, en fonction de la position angulaire de la pédale, envoie à l'unité de commande 20 du moteur 10 un signal électrique de demande de couple. En fonction de cette demande de couple qui émane du conducteur, l'unité de pilotage 20 agit sur le moteur 10 pour que celui-ci fournisse un couple correspondant au plus près à cette demande de couple. Dans un souci de simplification, on considérera la suite du texte que le moteur 10 suit exactement la consigne qui lui est fournie et qu'il délivre le couple attendu.

Notamment, si le moteur 10 est un moteur thermique, l'unité de pilotage 20 peut agir sur la quantité d'air admise dans le moteur, par le biais d'un papillon d'admission motorisé, sur la quantité de carburant injecté, par l'intermédiaire d'un dispositif d'injection, ainsi que sur le moment d'injection du carburant.

Bien entendu, en plus de l'information de demande de couple qu'il reçoit de la pédale d'accélérateur 24, l'unité de pilotage du moteur 20 peut recevoir des autres composants du véhicule d'autres informations, telles que par exemple le régime moteur Nm, les températures d'eau, d'huile, la température extérieure, etc. De même, l'unité 22 de commande de la boîte de vitesses reçoit des différents organes du véhicule des informations relatives notamment à la vitesse de rotation Ne de l'arbre d'entrée 14 de la boîte 16, la vitesse V du véhicule, ou encore un signal binaire d'activation du signal de freinage du véhicule.

Toutefois, conformément aux enseignements de l'invention, l'unité de pilotage 20 du moteur 10 et l'unité de commande 22 de la boîte 16 sont reliées l'une à l'autre par des moyens de communication 26 par lesquels les deux unités s'échangent des informations. Notamment, l'unité de pilotage 20 du moteur peut transmettre à l'unité de commande 22 de la boîte des informations relatives au couple réel fourni par le moteur, et à la demande de couple de la part du conducteur.

En sens inverse, conformément à l'invention, l'unité de commande 22 de la boîte 16 peut notamment transmettre à l'unité de pilotage 20 du moteur 10 un ordre de pilotage moteur, tel par exemple qu'une consigne de couple, ordre de pilotage qui est susceptible de s'imposer à l'unité de pilotage 20 du moteur 10.

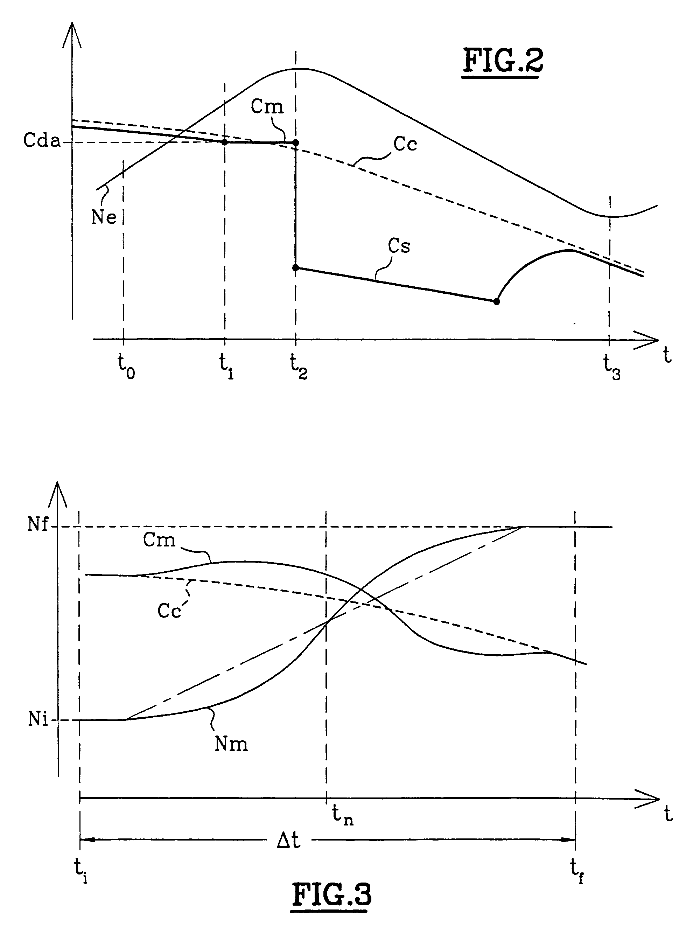

On a illustré sur la figure 2 un diagramme illustrant le couple demandé par le conducteur Cc, le couple moteur Cm et la vitesse de rotation Ne de l'arbre d'entrée 14 de la boîte 16 en fonction du temps au cours d'un changement de rapport de la boîte de vitesses 16, plus particulièrement lors d'un changement montant, c'est-à-dire lorsqu'on passe par exemple du premier au deuxième rapport, du deuxième au troisième rapport, etc.

Pour décrire les différentes étapes de ce changement de rapport, nous nous placerons dans le cas d'une boîte automatique de type classique à trains épicycloïdaux. Dans ce type de boîte de vitesses, un changement de rapport s'effectue en commandant l'ouverture d'un organe d'accouplement à friction associé à l'ancien rapport, puis en commandant la fermeture du dispositif d'accouplement à friction correspondant au nouveau rapport.

La commande de ces organes d'accouplement est généralement de type hydraulique mais l'une des difficultés majeures dans l'opération de changement de vitesse est de déterminer le moment à partir duquel le (ou les) organe(s) d'accouplement lié(s) au nouveau rapport commence(nt) "d'accrocher", c'est-à-dire commence(nt) à transmettre un couple effectif.

Un moyen de détecter cet accrochage est de surveiller la vitesse de rotation Ne de l'arbre d'entrée 14 de la boîte de vitesses. En effet, lorsque le rapport supérieur commence à s'enclencher, l'arbre d'entrée 14 de la boîte de vitesses voit apparaître, à son extrémité du côté de la boîte de vitesses 16, un couple résistant qui a tendance à le freiner par rapport au couple d'entraînement qui lui est fourni par l'organe de liaison 18.

On le voit donc, la vitesse de rotation Ne de l'arbre d'entrée 14 de la boîte de vitesses est liée au couple d'entraînement qui lui est fourni par le moteur 10 et au couple résistant qui lui est imposé par l'arbre de sortie 17 de la boîte 16, multiplié par le coefficient de démultiplication du rapport engagé.

Le degré d'accrochage du nouveau rapport est donc lié au pourcentage du couple résistant des roues qui est effectivement appliqué à l'arbre d'entrée 14.

Une variation de vitesse de l'arbre d'entrée 14 sera donc représentative d'une variation de ce degré d'accrochage.

Cependant, pour que la variation de vitesse de l'arbre d'entrée 14 soit un indicateur fiable du degré d'accrochage, il ne faut pas que le couple d'entraînement qui est fourni par l'organe de liaison 18 à l'arbre 14 varie de manière significative au cours de l'opération de changement de rapport.

Or, dans les véhicules automobiles connus jusqu'à présent, le conducteur garde à chaque instant la possibilité de modifier la demande de couple qu'il impose au moteur 10. Aussi, si lors d'un changement de rapport, le conducteur fait varier de manière importante sa demande de couple, il en résultera une variation importante du couple d'entraînement fourni à l'arbre d'entrée 14, ce qui perturbera la détection de l'accrochage du nouveau rapport et donc engendrera des à-coups de transmission de couple dans la gestion du passage.

Aussi, selon l'invention, l'unité de commande 22 de la boîte 16 ordonne à l'unité de pilotage 20 du moteur 10 de piloter ce dernier de manière qu'il fournisse, pendant une phase de détection d'accrochage, un couple déterminé appelé couple d'accrochage Cda. Ce couple d'accrochage peut être constant, comme cela est illustré sur la figure 2, ou il peut être variable. Dans les deux cas, il sera avantageusement déterminé en fonction de paramètres tels que le régime initial de rotation du moteur ou le style de conduite du conducteur.

Ainsi qu'on l'a représenté sur la figure 2, l'unité de commande 22 de la boîte de vitesses 16 détermine à un instant t₀ la nécessité d'un changement de rapport depuis un rapport inférieur vers un rapport supérieur. Cette détermination se fait de manière classique en fonction de paramètres liés à la vitesse du véhicule, au couple demandé par le conducteur Cc et aussi en fonction du style de conduite du conducteur.

A partir de cet instant t₀, l'unité de commande 16 commence à engager le processus de changement de rapport par lequel elle provoque la pré-ouverture des moyens d'accouplement à friction associés à l'ancien rapport, puis la pré-fermeture de ceux associés au nouveau rapport. Toutefois, peu après l'instant t₀ de décision du changement de rapport, l'unité de commande 22 de la boîte 16 impose, à partir de l'instant t₁, à l'unité de pilotage 20 de commander le moteur 10 pour qu'il fournisse un couple constant Cda de détection d'accrochage, ce couple pouvant être différent du couple Cc demandé par le conducteur par l'intermédiaire de la pédale d'accélérateur 24. Pendant cette étape de détection d'accrochage, le conducteur n'a donc plus d'influence sur la commande en couple du moteur.

Ainsi, en maintenant le couple moteur Cm constant pendant l'étape de détection d'accrochage, on peut détecter cet accrochage de manière absolument fiable par une simple analyse de la vitesse de rotation Ne de l'arbre d'entrée 14. Ainsi, comme cela est illustré à la figure 2, à l'instant t₂, on peut voir que la vitesse de rotation de l'arbre d'entrée 14 cesse de croître pour ensuite décroître. La dérivée en fonction du temps de la vitesse de rotation Ne s'annule donc à l'instant t₂ pour devenir ensuite négative. Au moment où cette dérivée s'annule, l'unité de commande 22 peut en déduire l'amorce d'accrochage du nouveau rapport.

Cependant, à cet instant t₂, l'ouverture totale des moyens d'accouplement à friction associés à l'ancien rapport est commandée et la fermeture totale de ceux associés au nouveau rapport se poursuit. Le changement de rapport n'est réellement terminé qu'à l'instant t₄ lorsque la vitesse de rotation Ne de l'arbre d'entrée 14 de la boîte 16 a atteint une vitesse égale à la vitesse du véhicule multipliée par le facteur de démultiplication de la chaîne de transmission pour le nouveau rapport. Pour connaître ce régime de rotation, pour lequel il n'y aura plus de glissement au niveau des moyens d'accouplement associés au nouveau rapport, il suffit donc de connaître la vitesse d'avancement du véhicule.

Selon un deuxième aspect de l'invention, après la phase de détection d'accrochage du nouveau rapport, l'unité de commande 22 de la boîte 16 continue d'imposer à l'unité de pilotage 20, pendant une étape de décroissance du régime moteur, un ordre de pilotage selon lequel le moteur doit délivrer un couple différent du couple demandé par le conducteur Cc.

Dans l'exemple de réalisation de la figure 2, l'unité de commande 22 détermine ainsi, après l'instant t₂, un couple de décroissance du régime moteur Cs qui suit une courbe de variation différente de celle du couple demandé par le conducteur. Ce couple Cs est déterminé par l'unité de commande 22 pour que la durée de l'étape de décroissance du régime moteur soit égale à une durée optimale en fonction d'un certain nombre de paramètres. Ainsi, le couple Cs peut être déterminé notamment en fonction du régime de rotation de l'arbre d'entrée au moment de l'accrochage et en fonction du style de conduite du conducteur, voire même du couple demandé par le conducteur.

En effet, pendant tout le temps compris entre l'instant t₂ de début d'accrochage du nouveau rapport, et l'instant t₄ de synchronisme tel que défini plus haut, il se produit, au niveau du moyen d'accouplement correspondant au nouveau rapport, un glissement qui empêche la transmission intégrale de la puissance fournie par le moteur.

En effet, la vitesse de rotation de l'arbre de sortie 17 de la boîte 16 reste sensiblement constante pendant le changement de rapport, mais, du fait de la différence de démultiplication entre l'ancien et le nouveau rapport, la vitesse Ne de l'arbre d'entrée 16, qui est proche de celle Nm du moteur 10, doit décroître d'une valeur haute à une valeur plus basse.

De manière connue, plus ce temps de décroissance est long, plus on peut penser que l'accrochage du rapport se fera "en douceur", sans à-coups. Cependant, tout au long de cette étape de décroissance du régime moteur, le conducteur n'a plus d'action sur l'avancement du véhicule et, si sa durée augmente, cela risque de provoquer une gêne pour le conducteur. Cela entraîne de plus une dépense énergétique importante au niveau des moyens d'accouplement à friction qui, à terme, peut conduire à une usure prématurée de la transmission.

Aussi, en fonction de paramètres tels que la vitesse d'avancement du véhicule, le style de conduite du conducteur, le régime initial du moteur lorsque le changement de rapport a été déclenché à l'instant t₀, mais aussi en fonction des rapports en jeu au cours du changement, ou encore en fonction du couple demandé par le conducteur, on peut avoir intérêt à avoir une durée plus ou moins longue pour cette étape de décroissance du régime moteur. Aussi, en fixant le niveau du couple de décroissance du régime moteur Cs à une valeur plus ou moins élevée, on aura une durée de décroissance du régime moteur plus ou moins longue.

Dans l'exemple de réalisation de la figure 2, la variation du couple Cs est représentée par une fonction linéaire décroissante en fonction du temps, mais d'autres types de variations peuvent être adoptées. Éventuellement, on peut choisir un couple de décroissance du régime moteur Cs constant, la valeur de cette constante dépendant, le cas échéant, des paramètres vus plus haut.

Dans tous les cas, le couple de décroissance du régime moteur Cs est généralement faible pour permettre une baisse relativement rapide de la vitesse de l'arbre d'entrée 14.

Ainsi donc, pendant toute la partie de la durée de l'étape de synchronisation qui sépare les instants t₂ et t₃ illustrés sur la figure 2, c'est l'unité de commande 22 de la boîte de vitesses 16 qui détermine le couple que doit fournir le moteur 10.

A partir de l'instant t₃, l'unité de commande 22 de la boîte 16 provoque une variation progressive de la commande du moteur de manière à rapprocher le couple effectif du moteur Cm de la demande de couple Cc exprimée par le conducteur. De préférence, les deux valeurs sont de nouveau égales dès qu'on atteint l'instant t₄ de synchronisation.

On notera que le second aspect de l'invention, à savoir l'imposition par l'unité de commande 22 d'un couple de décroissance du régime moteur, présente un grand intérêt tant dans le cas des boîtes automatiques classiques que dans le cas des boîtes de vitesses robotisées.

On a illustré sur la figure 3 un diagramme illustrant, en fonction du temps, le couple moteur Cm et la vitesse de rotation du moteur Nm, lors d'un changement de rapport descendant, c'est-à-dire lorsqu'on passe par exemple du second au premier rapport. On sait que, lors de ce type de changement de rapport, aussi appelé rétrogradage, on passe d'un ancien rapport à un nouveau rapport de vitesse qui est tel que les régimes moteur et d'entrée de boîte de vitesses doivent être supérieurs en fin de changement à ce qu'ils étaient en début de changement de rapport.

Or, au cours d'un tel rétrogradage, il existe une phase au cours de laquelle le moteur est désaccouplé de la boîte de vitesse. Durant cette phase, le régime de rotation du moteur va donc pouvoir varier en fonction de très nombreux paramètres parmi lesquels figurent bien entendu la position de la pédale d'accélérateur mais aussi l'énergie absorbée par divers équipements du véhicule (climatisation, alternateur, etc..). De la sorte, l'évolution du régime de rotation du moteur peut prendre des valeurs très différentes d'un rétrogradage à un autre.

Or, si le régime de rotation du moteur est trop différent du régime théorique lié à la vitesse d'avancement du véhicule et au rapport de démultiplication du nouveau rapport engagé, il se produira inévitablement des à-coups en fin de passage.

Aussi, conformément aux enseignements de l'invention, lors du rétrogradage, l'unité de commande 22 de la boîte 16 envoie à l'unité de pilotage 20 un ordre de pilotage selon lequel le moteur doit être piloté pour atteindre un régime déterminé, indépendamment de l'action du conducteur sur la pédale d'accélérateur 24.

On a illustré sur la figure 3 les régimes Ni, Nf de rotation du moteur respectivement à l'instant de début t; et à l'instant t_{f} de fin de changement de rapport pour deux rapports consécutifs, le véhicule conservant sensiblement une vitesse identique. Les instants tᵢ et t_{f} sont séparés d'un intervalle de temps ΔT qui correspond à un temps optimal pour réaliser le passage de vitesse. De la sorte, il est possible de tracer une courbe théorique de variation de la vitesse de rotation du moteur entre le début et la fin du changement de rapport pour que, en fin de rapport, le moteur ait atteint la vitesse de rotation Nf théorique. Dans l'exemple illustré, cette courbe théorique est représentée par un simple segment de droite.

On a également illustré sur la figure 3 la demande de couple Cc exprimée par le conducteur, le couple réel fourni par le moteur Cm, et la courbe de variation de la vitesse de rotation effective Nm du moteur 10.

Conformément aux enseignements de l'invention, au cours du rétrogradage, le moteur est commandé non pas pour fournir un couple Cm égal à la demande de couple Cc exprimée par le conducteur, mais pour fournir un couple Cm qui permette au moteur 10 de suivre au plus près la courbe de variation théorique de la vitesse du moteur. On dit alors que le moteur 10 est piloté en régime.

Ainsi, entre les instants tₗ et tₙ, on voit que la vitesse de rotation du moteur 10 est inférieure à la courbe théorique de sorte que le couple moteur Cm est régulé dans le sens d'une augmentation, afin d'augmenter la vitesse de rotation du moteur. Au contraire, au-delà de l'instant tₙ, la vitesse de rotation du moteur devient supérieure à cette courbe théorique. De sorte, le couple Cm est alors régulé dans le sens d'une diminution permettant de ralentir l'accroissement de la vitesse de rotation Nm. La régulation du couple moteur en fonction de la vitesse de rotation du moteur Nm peut se faire à l'aide d'un régulateur classique par exemple de type PID, mais elle peut aussi être réalisée à l'aide d'un régulateur fonctionnant en logique floue, ou autre.

Dans le cadre d'une boîte de vitesse automatique classique, l'arbre d'entrée 14 de la boîte 16 est entraîné en continu par le moteur, même pendant le changement de rapport. Ainsi, dans ce cas, on aura intérêt à commander le moteur non plus pour asservir le régime de rotation de l'arbre moteur 12, mais directement pour asservir le régime de rotation Ne de l'arbre d'entrée 16.

Grâce à ce procédé de commande du moteur, on obtient à coups sûr en fin de passage un régime de rotation idéal du moteur pour éviter tout à-coups.

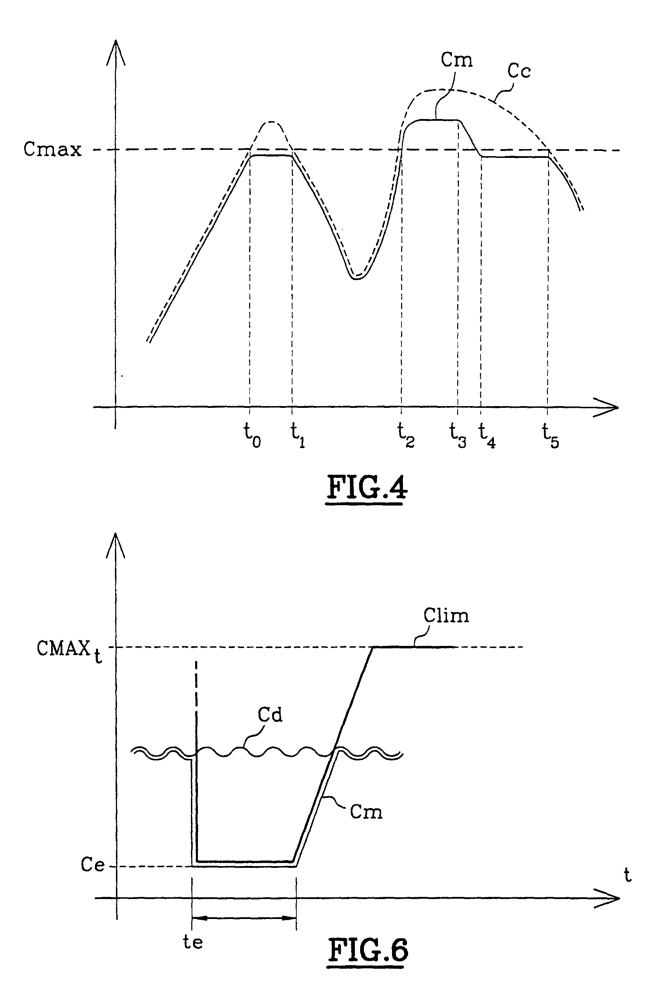

On a illustré sur la figure 4 une autre caractéristique de l'invention qui permet d'éviter d'imposer à une transmission un couple trop important susceptible de la dégrader.

En effet, il arrive parfois que, pour des raisons économiques, on soit conduit à monter sur un véhicule un moteur et une transmission (boîte de vitesses, différentiel...) qui ne sont pas parfaitement adaptés l'un à l'autre, le moteur étant susceptible de délivrer une puissance et un couple supérieurs à ce que la transmission peut supporter.

Aussi, dans le cadre d'un véhicule dans lequel l'unité de commande 22 de la boîte de vitesses 16 peut imposer à l'unité de pilotage 20 du moteur 10 un ordre de pilotage du moteur, il est apparu intéressant de pouvoir permettre à l'unité de commande 22 de limiter le couple fourni par le moteur pour éviter tout endommagement de la transmission.

Ainsi, dans l'exemple de réalisation illustré à la figure 4, on peut voir que le moteur 10 du véhicule est susceptible de délivrer un couple maximal qui est supérieur au couple CMAXt susceptible d'être admis par la transmission. Aussi, selon un premier aspect de l'invention, il est prévu que l'unité de commande 22 de la boîte de vitesses 16 puisse empêcher le moteur 10 de délivrer un couple Cm supérieur à la valeur de seuil CMAXt.

De la sorte, comme on peut le voir entre les instants t₀ et t₁ de la figure 4, même si le conducteur demande un couple supérieur à cette valeur de seuil, l'unité de commande 22 empêchera le moteur 10 de fournir une valeur de couple supérieure à la valeur de seuil.

Toutefois, selon un aspect particulier de l'invention, il est prévu que l'unité de commande 22 de la boîte 16 permette au moteur de fournir un couple supérieur à la valeur de seuil CMAXt, mais pendant un temps limité, et à condition que cela corresponde à une demande ponctuelle du conducteur.

On peut ainsi choisir de n'autoriser un tel dépassement de la valeur de seuil CMAXt, que si le conducteur a manifesté un besoin urgent de couple, par exemple par le biais de l'enfoncement très rapide de la pédale d'accélérateur, ainsi que cela est représenté dans la deuxième partie de la figure 4. La vitesse d'enfoncement de la pédale se traduit, sur le graphe de la figure 4, par une pente plus ou moins importante de la courbe illustrant le couple demandé Cc par le conducteur. Cette situation est typique d'une manoeuvre de dépassement.

Dans ce cas, on peut choisir soit de permettre au moteur 10 de délivrer l'intégralité de sa puissance conformément à la demande Cc du conducteur pendant un certain intervalle de temps, soit, comme cela a été illustré sur la figure 4, de plafonner cet excès de couple fourni par le moteur à une deuxième valeur de seuil supérieure à la valeur CMAXt. Dans tous les cas, on prévoira que ce surcroît de couple ne puisse être délivré par le moteur que pendant une certaine durée, par exemple illustrée par l'intervalle de temps t₂, t₃ (sur la figure 4). Au-delà de l'instant t₃, même si le conducteur continue de solliciter un couple supérieur à la valeur de seuil CMAXt, la valeur du couple Cm fourni par le moteur est régulée pour revenir progressivement entre les instants t₃ et t₄ jusqu'à la valeur de seuil CMAXt.

Ensuite, jusqu'à l'instant t₅ où la demande de couple formulée par le conducteur redevient inférieure à la valeur de seuil, le couple moteur est maintenu à la valeur de seuil CMAXt. Au-delà de l'instant t₅, le couple moteur Cm fourni est de nouveau égal au couple demandé Cc par le conducteur.

Cette disposition de l'invention permet donc de préserver mécaniquement l'ensemble de la transmission, même si le moteur se trouve surdimensionné, tout en permettant au conducteur de bénéficier, dans certaines circonstances, d'un surcroît de couple et de puissance, par exemple pour effectuer un dépassement.

On notera que cette fonction de limitation de couple comporte trois aspects distincts. Selon un premier aspect, on limite le couple du moteur en fonction de la capacité de résistance de la transmission. Selon un deuxième aspect, cette limitation est supprimée dans certaines conditions particulières dans lesquelles un surcroît de couple est autorisé. Dans un troisième aspect, on limite la durée pendant laquelle ce surcroît de couple est autorisé.

Dans l'exemple de réalisation de l'invention qui vient d'être décrit, ces trois aspects sont combinés. Toutefois, on peut choisir de ne combiner que deux de ces aspects.

Ainsi, on peut par exemple choisir de prévoir que le surcroît de couple sera autorisé indépendamment de la vitesse d'enfoncement de la pédale mais que la durée de ce surcroît sera limitée. De même, on peut éventuellement prévoir de ne pas mettre en oeuvre la limitation de la durée du surcroît de couple, mais de ne permettre ce surcroît que dans certaines conditions particulières.

Dans tous les cas, on pourra par exemple subordonner l'autorisation du surcroît de couple au fait que le véhicule se trouve dans une plage de vitesse déterminée. De même, la valeur du surcroît de couple et la durée de ce surcroît seront avantageusement déterminées en fonction de paramètres tels que le style de conduite du conducteur, la température d'huile de la boîte de vitesses, l'état de vieillissement de la transmission, la pente de la route ou la vitesse d'enfoncement de l'accélérateur, etc...

On notera que cette possibilité de limitation du couple moteur par l'unité de commande 22 de la boîte 16 peut être mise en oeuvre pour tout type de boîte de vitesses.

Par ailleurs, selon un autre aspect de l'invention, l'unité de commande 22 de la boîte 16 peut être amenée à limiter le couple moteur susceptible d'être fourni par le moteur 10.

Ainsi, on sait que la plupart des véhicules comportant une boîte automatique classique comportent aussi un convertisseur de couple hydraulique interposé entre le moteur 10 et la boîte 16. Ce convertisseur 18 est sujet à des pertes énergétiques du fait du glissement qui apparaît sous charge entre ses roues d'entrée et de sortie. Pour éviter ces pertes, on prévoit parfois un dispositif de pontage qui relie mécaniquement les deux roues du convertisseur pour annuler tout glissement. Ce dispositif de pontage est en général mis en oeuvre lorsque les rapports supérieurs sont engagés. Selon l'invention, il peut être intéressant de limiter le couple fournit par le moteur 10 au cours de l'opération de pontage. Dans ce cas, on prévoira donc que l'unité de commande 22 de la boîte de vitesses 16 envoie à l'unité de pilotage du moteur un ordre de pilotage selon lequel il ne peut délivrer un couple supérieur à un couple maximum de pontage.

De même, il peut-être intéressant de limiter le couple fourni par le moteur au cours de l'engagement d'un rapport à partir de la position neutre de la boîte, c'est-à-dire la position pour laquelle elle ne transmet aucun couple entre son entrée et sa sortie. Dans ce cas, lors de l'engagement du rapport, l'unité de commande 22 de la boîte de vitesse 16 envoie à l'unité de pilotage du moteur un ordre de pilotage selon lequel il ne peut délivrer un couple supérieur à un couple maximum d'engagement Ce.

On a ainsi illustré à la figure 6 le cas de l'engagement du premier rapport qui commence à l'instant te. La courbe Cd représente la demande de couple du conducteur tandis que la courbe Clim illustre la limite maximale de couple qui est imposée au moteur 10 par l'unité de pilotage 22 de la boîte 16. Le couple effectivement délivré par le moteur 10 est illustré par la courbe Cm.

On voit que, à l'instant te, le couple limite imposé au moteur est égal à une valeur Ce correspondant à un couple à ne pas dépasser au cours de l'engagement. La valeur de ce couple peut par exemple varier en fonction du rapport en cours d'engagement. Cette limitation est maintenue par l'unité de pilotage 22 de la boîte 16 pendant une durée dt prédéterminée au-delà de laquelle la valeur de Clim augmente selon une pente linéaire pour atteindre par exemple la valeur CMAXt vue plus haut. Aussi, à l'expiration du délai dt après l'instant te, délai qui peut éventuellement varier en fonction du rapport en cours d'engagement, la valeur du couple Cm délivré par le moteur suit la pente de Clim jusqu'à atteindre le niveau de la demande de couple Cd formulée par le conducteur. Ce mode de réalisation de l'invention permet d'éviter l'endommagement de la transmission au moment de l'engagement d'un rapport sous couple important.

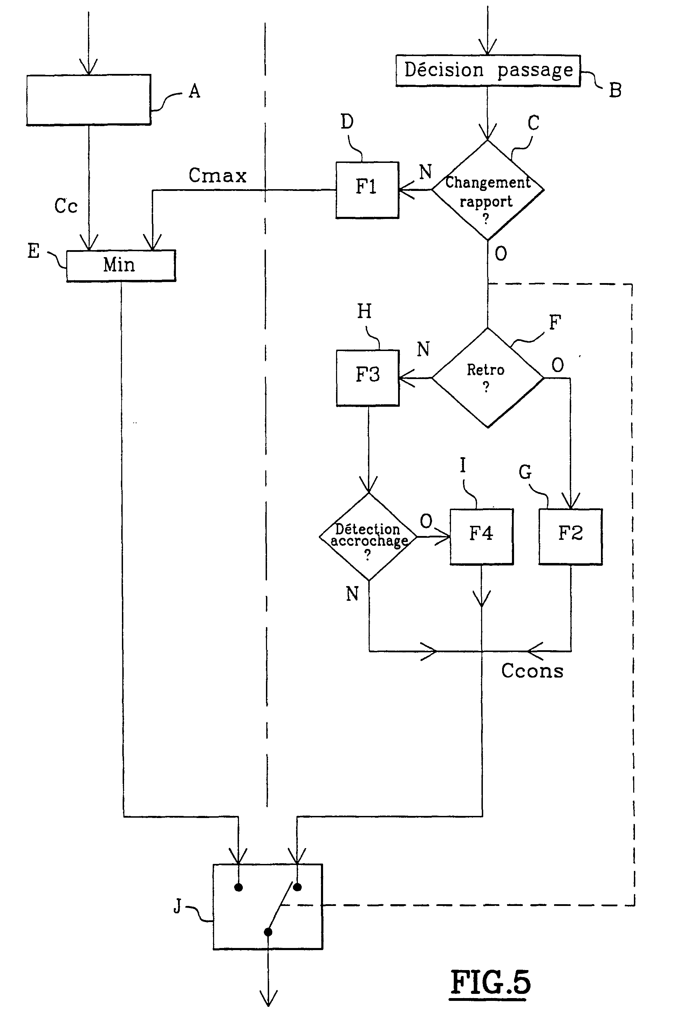

On a illustré sur la figure 5 un organigramme qui permet d'illustrer de manière simplifiée différentes étapes qui permettent de mettre en oeuvre les différents aspects de l'invention qui viennent d'être décrits. L'organigramme de la figure 5 est divisé en deux parties, la partie de gauche représentant les opérations effectuées par l'unité de pilotage 20 du moteur 10, la partie de droite représentant les opérations exécutées par l'unité de commande 22 de la boîte 16. Cet organigramme s'applique au cas où la boîte 16 est une boîte automatique classique.

A l'étape A, l'unité de pilotage 20 détermine la demande de couple Cc exprimée par le conducteur, notamment en fonction du signal reçu de la pédale d'accélérateur 24 et en fonction de la vitesse de rotation du moteur Nm, mais aussi en fonction de consignes de couple qui peuvent être envoyées par divers dispositifs électroniques de contrôle du véhicule, tel qu'un système antiblocage, un système antipatinage, etc., et qui peuvent influencer la valeur du couple demandé.

En parallèle, aux étapes B et C, l'unité de commande 22 de la boîte de vitesses 16 détermine, de manière par ailleurs connue, s'il y a lieu d'opérer un changement de vitesses.

Dans la négative, l'unité de commande 22 de la boîte 16 procède, à l'étape D, au traitement F1 par lequel elle assure la limitation du couple délivré par le moteur conformément à ce qui a été décrit en référence à la figure 4.

Pour cela, l'unité de commande 22 transmet à l'unité de pilotage 20 une information de couple maximum à ne pas dépasser CMAX, ce couple maximum CMAX tenant compte à la fois du couple maximum CMAXt susceptible d'être supporté par la transmission, mais aussi de la possibilité de dépasser cette valeur de seuil dans des conditions particulières. Cette consigne CMAX est comparée à l'étape E à la demande de couple Cc exprimée par le conducteur, l'unité de pilotage 10 ne retenant que la plus petite de ces deux valeurs.

En revenant à l'étape C, on voit que dans le cas où un changement de rapport a été décidé à l'étape B, il est procédé ensuite à l'étape F à un nouveau test qui vérifie si le changement de rapport décidé est un rétrogradage. Dans l'affirmative, l'unité de commande 22 de la boîte 16 procède alors, à l'étape G, à l'élaboration d'une consigne de couple Ccons élaborée selon la stratégie F2 de pilotage en régime du moteur qui a été décrite en référence à la figure 3.

Dans le cas où, à l'étape F, il est déterminé que le changement de rapport n'est pas un rétrogradage, il s'agit donc d'un changement de rapport montant. Dans le cas envisagé où la boîte de vitesses est une boîte de vitesses automatique classique, l'unité de commande 22 de la boîte 16 va donc procéder, à l'étape H, à la détection de l'accrochage du rapport supérieur selon le procédé F3 décrit en référence à la figure 2. Une fois cette détection achevée, l'unité de commande 22 met oeuvre, à l'étape I, la stratégie F4 de pilotage en couple du moteur pour obtenir une durée de synchronisation déterminée entre l'arbre d'entrée 14 de la boîte de vitesses et l'arbre de sortie 17, ainsi que cela a été décrit plus haut, toujours en référence à la figure 2.

Dans tous les cas, les consignes de couple Ccons qui ont été élaborées respectivement à l'étape E en régime établi, en l'absence de changement de rapport, et à l'une ou l'autre des étapes H, I ou G en cas de changement de rapport, sont susceptibles d'être délivrées au moteur.

En effet, comme on peut le voir à l'étage J, une bascule logique reçoit en entré d'une part l'information Ccons déterminée par l'unité de commande lors d'un changement de rapport, et, d'autre part, l'information déterminée à l'étape e, à savoir la plus petite des valeurs Cc ou CMAX.

La bascule logique est commandée par l'existence ou non d'un état de changement de rapport, et elle détermine lequel de ces deux signaux est effectivement délivré au moteur. Ainsi, il est prévu qu'en cas de changement de rapport en cours, l'information de couple qui est transmise au moteur est toujours la consigne Ccons déterminée par l'unité de commande 22.

Dans tous les cas, on prévoira avantageusement que, lorsque l'unité de commande 22 de la boîte 16 envoie un ordre de pilotage à l'unité de pilotage du moteur 10, toutes les autres éventuelles actions correctrices transmises à cette unité de pilotage sont inhibées. On pense ici notamment aux dispositifs anti-patinage qui jouent sur le couple délivré par le moteur, aux dispositifs anti-cliquetis etc.

## Revendications

1. Véhicule automobile comportant une boîte de vitesses à changements de rapports automatisés, du type comportant une unité de commande (22) de la boîte de vitesses (16) et une unité de pilotage (20) du moteur (10), du type dans lequel l'unité de pilotage (20) reçoit, par l'intermédiaire d'une pédale d'accélérateur (24), une information représentative de la demande de couple du conducteur en fonction de laquelle elle est susceptible de commander le fonctionnement du moteur (10), du type dans lequel l'unité de pilotage (20) du moteur est susceptible de fournir des informations à l'unité de commande (22) de la boîte (16), et du type dans lequel le pilotage du moteur est susceptible d'être modifié en fonction d'informations transmises par l'unité de commande (22) de la boîte (16) à l'unité de pilotage (20) du moteur (10), et du type dans lequel, pour certaines phases de fonctionnement du véhicule, l'unité de commande (22) de la boîte de vitesses (16) inhibe l'action de l'information de demande de couple à laquelle elle substitue un ordre de pilotage moteur auquel l'unité de pilotage (20) est subordonnée, **caractérisé en ce que** lors du passage d'un ancien rapport de vitesses à un nouveau rapport de vitesses inférieur, l'unité de commande (22) de la boîte (16) transmet à l'unité de pilotage (20) du moteur (10) un ordre de pilotage selon lequel le moteur (10) est piloté pour suivre une courbe de variation de régime prédéterminée.

2. Véhicule automobile selon la revendication 1,
**caractérisé en ce que** les rapports de la boîte de vitesses (16) sont déterminés par l'état ouvert ou fermé d'accouplements à friction, **en ce que** la boîte de vitesses (16) est reliée au moteur (10) par un convertisseur de couple hydraulique (18), et **en ce que** lors du passage d'un ancien rapport de vitesses à un nouveau rapport de vitesses inférieur, l'unité de commande (22) de la boîte (16) transmet à l'unité de pilotage (20) du moteur (10) un ordre de pilotage selon lequel le moteur (10) est piloté pour qu'un arbre d'entrée (14) de la boîte de vitesse (16) suive une courbe de variation de régime déterminée.

3. Véhicule automobile selon l'une quelconque des revendications précédentes, **caractérisé en ce que** les rapports de la boîte de vitesses (16) sont déterminés par l'état ouvert ou fermé d'accouplements à friction, **en ce que** la boîte de vitesses (16) est reliée au moteur (10) par un convertisseur de couple hydraulique (18), **en ce que** lors du passage d'un ancien rapport de vitesses à un nouveau rapport de vitesses supérieur, l'unité de commande (22) de la boîte (16) transmet à l'unité de pilotage (20) du moteur (10), pendant une étape de détection d'accrochage du nouveau rapport, un ordre de pilotage selon lequel le moteur est piloté pour fournir un couple de détection d'accrochage (Cda).

4. Véhicule automobile selon la revendication 3, **caractérisé en ce que** l'accrochage est détecté lorsqu'il est mesuré une amorce de chute de la vitesse de rotation (Ne) d'un arbre d'entrée (14) de la boîte de vitesses (16).

5. Véhicule automobile selon l'une des revendications 3 ou 4, **caractérisé en ce que** le couple de détection d'accrochage (Cda) est un couple constant.

6. Véhicule automobile selon l'une des revendications 3 ou 4, **caractérisé en ce que** la valeur du couple de décroissance du régime moteur est une valeur qui évolue pendant l'étape de décroissance du régime moteur en fonction du couple demandé par le conducteur.

7. Véhicule automobile selon l'une quelconque des revendications précédentes, **caractérisé en ce que** lors du passage d'un ancien rapport de vitesses à un nouveau rapport de vitesses supérieur, l'unité de commande (22) de la boîte (16) transmet à l'unité de pilotage (20) du moteur (10), pendant une étape de décroissance du régime moteur, un ordre de pilotage selon lequel le moteur est piloté pour fournir un couple (Cs) de décroissance du régime moteur.

8. Véhicule automobile selon la revendication 7, **caractérisé en ce que** le couple de décroissance (Cs) du régime moteur est déterminé par l'unité de commande (22) pour que la durée de l'étape de décroissance du régime moteur soit sensiblement égale à une durée prédéterminée.

9. Véhicule automobile selon l'une des revendications 7 ou 8 prise en combinaison avec l'une des revendications 3 à 6, **caractérisé en ce que** l'étape de décroissance du régime moteur commence lorsque l'accrochage du nouveau rapport est détecté.

10. Véhicule automobile selon l'une quelconque des revendications 7 à 9, **caractérisé en ce que** la valeur du couple (Cs) de décroissance du régime moteur est une valeur constante pendant l'étape de décroissance du régime moteur.

11. Véhicule automobile selon l'une quelconque des revendications 7 à 9, **caractérisé en ce que** la valeur du couple (Cs) de décroissance du régime moteur est une valeur qui dépend du niveau de couple demandé par le conducteur.

12. Véhicule automobile selon l'une quelconque des revendications précédentes, **caractérisé en ce que** l'unité de commande (22) de la boîte de vitesses (16) reçoit l'information de demande de couple fournie par la pédale d'accélérateur (24), **en ce que** l'information de demande de couple est comparée par l'unité de commande à une valeur de couple maximum (CMAXt), et **en ce que** lorsque la demande de couple reste supérieure à la valeur de couple maximum (CMAXt) pendant une durée prédéterminée, l'unité de commande (22) de la boîte (16) transmet à l'unité de pilotage (20) du moteur (10) un ordre de pilotage selon lequel le moteur est piloté pour fournir un couple égal à la valeur de couple maximum (CMAXt).

13. Véhicule automobile selon l'une quelconque des revendications précédentes, **caractérisé en ce que** l'unité de commande (22) de la boîte de vitesses (16) reçoit l'information de demande de couple fournie par la pédale d'accélérateur (24), **en ce que** l'information de demande de couple est comparée par l'unité de commande (22) à une valeur de couple maximum (CMAXt), et **en ce que** lorsque la demande de couple devient supérieure à la valeur de couple maximum (CMAXt), l'unité de commande (22) de la boîte (16) transmet à l'unité de pilotage (20) du moteur (10) un ordre de pilotage selon lequel le moteur est piloté pour fournir un couple égal à la valeur de couple maximum (CMAXt) sauf dans le cas d'une augmentation soudaine de la demande de couple (Cc).

14. Véhicule automobile selon les revendications 12 et 13 prises en combinaison, **caractérisé en ce que**, dans le cas d'une augmentation soudaine de la demande de couple (Cc) au cours de laquelle la demande de couple devient supérieure à la valeur de couple maximum (CMAXt), l'unité de commande (22) de la boîte (16) transmet à l'unité de pilotage (20) du moteur (10) un ordre de pilotage selon lequel le moteur est piloté pour fournir un couple supérieur à la valeur de couple maximum (CMAXt), et **en ce que** si, après une durée prédéterminée, la demande de couple reste supérieure à la valeur de couple maximum (CMAXt), l'unité de commande (22) de la boîte (16) transmet à l'unité de pilotage (20) du moteur (10) un nouvel ordre de pilotage selon lequel le moteur est piloté pour fournir un couple égal à la valeur de couple maximum (CMAXt).

15. Véhicule automobile selon l'une quelconque des revendications 12 à 14, **caractérisé en ce que** la valeur de couple maximum (CMAXt) correspond à un couple maximum admissible par un organe de transmission du véhicule.

16. Véhicule automobile selon l'une quelconque des revendications précédentes, **caractérisé en ce que** la boîte de vitesses (16) est reliée au moteur (10) par un convertisseur de couple hydraulique (18) susceptible d'être ponté, et **en ce que** lors du pontage du convertisseur (18), l'unité de commande (22) de la boîte de vitesse (16) envoie à l'unité de pilotage du moteur un ordre de pilotage selon lequel il ne peut délivrer un couple supérieur à un couple maximum de pontage.

17. Véhicule automobile selon l'une quelconque des revendications précédentes, **caractérisé en ce que** les rapports de la boîte de vitesses (16) sont déterminés par l'état ouvert ou fermé d'accouplements à friction, et **en ce que** lors de l'engagement d'un rapport, l'unité de commande (22) de la boîte de vitesse (16) envoie à l'unité de pilotage du moteur un ordre de pilotage selon lequel il ne peut délivrer un couple supérieur à un couple maximum d'engagement.

## Claims

1. A motor vehicle comprising a fully automatic transmission, of the type comprising a transmission (16) control unit (22) and an engine (10) management unit (20), of the type in which the management unit (20) receives, from a throttle pedal (24), information representative of the torque demand from the driver, on the basis of which information it is capable of controlling the operation of the engine (10), of the type in which the engine management unit (20) is capable of supplying information to the transmission (16) control unit (22), and of the type in which the engine management can be modified as a function of information transmitted by the transmission (16) control unit (22) to the engine (10) management unit (20), and of the type in which, for certain phases of operation of the vehicle, the transmission (16) control unit (22) inhibits the action of the torque demand information, for which it substitutes an engine management command to which the management unit (20) is subordinated, **characterised in that** when shifting from an old gear ratio to a new gear ratio which is lower, the transmission (16) control unit (22) transmits to the engine (10) management unit (20), a management command whereby the engine (10) is managed to cause it to follow a predetermined speed variation curve.

2. The motor vehicle as claimed in claim 1, **characterised in that** the transmission (16) ratios are determined by whether friction couplings are disengaged or engaged, **in that** the transmission (16) is connected to the engine (10) by a hydraulic torque converter (18), **in that** when shifting from an old gear ratio to a new gear ratio which is lower, the transmission (16) control unit (22) transmits to the engine (10) management unit (20) a management command whereby the engine (10) is managed such that an input shaft (14) of the transmission (16) follows a given speed variation curve.

3. The motor vehicle as claimed in either of the preceding claims, **characterised in that** the transmission (16) ratios are determined by whether friction couplings are disengaged or engaged, **in that** the transmission (16) is connected to the engine (10) by a hydraulic torque converter (18), **in that** when shifting from an old gear ratio to a new gear ratio which is higher, the transmission (16) control unit (22) transmits to the engine (10) management unit (20), during a step in which it is detected that the new ratio has bitten, a management command whereby the engine is managed so that it provides a bite detection torque (Cda).

4. The motor vehicle as claimed in claim 3, **characterised in that** bite is detected when the onset of the drop in the rotational speed (Ne) of an input shaft (14) of the transmission (16) is measured.

5. The motor vehicle as claimed in one of claims 3 and 4, **characterised in that** the bite detection torque (Cda) is a constant torque.

6. The motor vehicle as claimed in one of claims 3 and 4, **characterised in that** the value of the engine speed decrease torque is a value which changes during the engine speed decrease step as a function of the torque demanded by the driver.

7. The motor vehicle as claimed in any of the preceding claims, **characterised in that** when shifting from an old gear ratio to a new gear ratio which is higher, the transmission (16) control unit (22) transmits to the engine (10) management unit (20), during an engine speed decrease step, a management command whereby the engine is managed so that it supplies an engine speed decrease torque (Cs).

8. The motor vehicle as claimed in claim 7, **characterised in that** the engine speed decrease torque (Cs) is determined by the control unit (22) so that the duration of the engine speed decrease step is more or less equal to a predetermined duration.

9. The motor vehicle as claimed in one of claims 7 and 8 taken in combination with one of claims 3 to 6, **characterised in that** the engine speed decrease step begins when the biting of the new ratio is detected.

10. The motor vehicle as claimed in any of claims 7 to 9, **characterised in that** the value of the engine speed decrease torque (Cs) is a value that is constant during the engine speed decrease step.

11. The motor vehicle as claimed in any of claims 7 to 9, **characterised in that** the value of the engine speed decrease torque (Cs) is a value which depends on the level of torque demanded by the driver.

12. The motor vehicle as claimed in any of the preceding claims, **characterised in that** the transmission (16) control unit (22) receives the torque demand information supplied by the throttle pedal (24), **in that** the torque demand information is compared by the control unit with a maximum torque value (CMAXt), and **in that** when the torque demand remains higher than the maximum torque value (CMAXt) for a predetermined duration, the transmission (16) control unit (22) transmits to the engine (10) management unit (20), a management command whereby the engine is managed so that it supplies a torque equal to the maximum torque value (CMAXt).

13. The motor vehicle as claimed in any of the preceding claims, **characterised in that** the transmission (16) control unit (22) receives the torque demand information supplied by the throttle pedal (24), **in that** the torque demand information is compared by the control unit (22) with a maximum torque value (CMAXt), and **in that** when the torque demand becomes higher than the maximum torque value (CMAXt), the transmission (16) control unit (22) transmits to the engine (10) management unit (20), a management command whereby the engine is managed so that it supplies a torque equal to the maximum torque value (CMAXt), except in the event of a sudden increase in the demand for torque (Cc).

14. The motor vehicle as claimed in claim 12 and 13 taken in combination, **characterised in that**, in the event of a sudden increase in the demand for torque (Cc), during which the torque demand becomes higher than the maximum torque value (CMAXt), the transmission (16) control unit (22) transmits to the engine (10) management unit (20) a management command whereby the engine is managed so as to provide a torque which is higher than the maximum torque value (CMAXt), and **in that** if, after a predetermined duration, the torque demand remains higher than the maximum torque value (CMAXt), the transmission (16) control unit (22) transmits to the engine (10) management unit (20) a new management command whereby the engine is managed so that it supplies a torque equal to the maximum torque value (CMAXt).

15. The motor vehicle as claimed in any of claims 12 to 14, **characterised in that** the maximum torque value (CMAXt) corresponds to a maximum permissible torque that can be transmitted through part of the vehicle driveline.

16. The motor vehicle as claimed in any of the preceding claims, **characterised in that** the transmission (16) is connected to the engine (10) by a hydraulic torque converter (18) of the lockup type, and **in that** when the converter (18) locks up, the transmission (16) control unit (22) sends to the engine management unit a management command whereby it cannot deliver a torque higher than a maximum lockup torque.

17. The motor vehicle as claimed in any of the preceding claims, **characterised in that** the ratios of the transmission (16) are determined by whether friction couplings are disengaged or engaged, and **in that** when a ratio is engaged, the transmission (16) control unit (22) sends to the engine management unit a management command whereby it cannot deliver a torque that is higher than a maximum engagement torque.

## Patentansprüche

1. Kraftfahrzeug mit einem automatischen Schaltgetriebe vom Typ mit einer Steuereinheit (22) für das Schaltgetriebe (16) und einer Führungseinheit (20) des Motors (10) vom Typ, bei dem die Führungseinheit (20) über ein Gaspedal (24) eine für die Drehmomentanforderung durch den Fahrer repräsentative Information empfängt, in Abhängigkeit von der sie in der Lage ist, den Betrieb des Motors (10) zu steuern, wobei die Führungseinheit (20) des Motors in der Lage ist, Informationen an die Steuereinheit (22) des Getriebes (16) zu senden und die Führung des Motors in Abhängigkeit von der Steuereinheit (22) des Getriebes (16) an die Führungseinheit (20) des Motors (10) übertragenen Informationen veränderbar ist und für bestimmte Betriebsphasen des Fahrzeugs die Steuereinheit (22) des Schaltgetriebes (16) die Wirkung der Drehmomentanforderungsinformation sperrt, die sie durch einen Motorführungsbefehl ersetzt, dem die Führungseinheit (20) untergeordnet ist, **dadurch gekennzeichnet, dass** beim Übergang von einem alten Gang in einen neuen, niedrigeren Gang die Steuereinheit (22) des Schaltgetriebes (16) an die Führungseinheit (20) des Motors (10) einen Führungsbefehl überträgt, demzufolge der Motor (10) geführt wird, um eine vorgegebene Betriebszustandsänderungskurve zu verfolgen.

2. Kraftfahrzeug nach Anspruch 1, dort gekennzeichnet, dass die Gänge des Schaltgetriebes (16) durch den offenen oder geschlossenen Zustand von Reibkupplungen festgelegt sind, dass das Schaltgetriebe (16) mit dem Motor (10) über einen hydraulischen Drehmomentwandler (18) verbunden ist, und dass beim Übergang von einem alten Gang in einen neuen, niedrigeren Gang die Steuereinheit (22) des Schaltgetriebes (16) an die Führungseinheit (20) des Motors (10) einen Führungsbefehl sendet, demzufolge der Motor (10) so geführt wird, dass eine Eingangswelle (14) des Schaltgetriebes (16) eine vorgegebene Betriebszustandsänderungskurve verfolgt.

3. Kraftfahrzeug nach einem der vorigen Ansprüche, **dadurch gekennzeichnet, dass** die Gänge des Schaltgetriebes (16) durch den offenen oder geschlossenen Zustand von Reibkupplungen festgelegt sind, dass das Schaltgetriebe (16) mit dem Motor (10) über einen hydraulischen Drehmomentwandler verbunden ist, und dass beim Übergang von einem alten Gang in einen neuen, höheren Gang die Steuereinheit (22) des Schaltgetriebes (16) an die Führungseinheit (20) des Motors (10) während eines Schritts der Erfassung des Einlegens des neuen Gangs einen Führungsbefehl sendet, demzufolge der Motor geführt wird, um ein Einlegungserfassungsdrehmoment (Cda) zu liefern.

4. Kraftfahrzeug nach Anspruch 3, **dadurch gekennzeichnet, dass** das Einlegen erfasst wird, wenn ein Ansatz eines Abfalls der Drehgeschwindigkeit (Ne) einer Eingangswelle (14) des Schaltgetriebes (16) erfasst wird.

5. Kraftfahrzeug nach einem der Ansprüche 3 oder 4, **dadurch gekennzeichnet, dass** das Einlegungserfassungsdrehmoment (Cda) ein konstantes Drehmoment ist.

6. Kraftfahrzeug nach einem der Ansprüche 3 oder 4, **dadurch gekennzeichnet, dass** der Wert des Abnahmedrehmoments des Motorbetriebszustands ein Wert ist, der sich während des Schritts der Abnahme des Motorbetriebszustandes in Abhängigkeit vom vom Fahrer verlangten Drehmoment ändert.

7. Kraftfahrzeug nach einem beliebigen der vorherigen Ansprüche, **dadurch gekennzeichnet, dass** beim Übergang von einem alten Gang in einen neuen, höheren Gang die Steuereinheit (22) des Schaltgetriebes (16) an die Führungseinheit (20) des Motors (10) während eines Schritts der Abnahme des Motorbetriebszustandes einen Führungsbefehl sendet, demzufolge der Motor geführt wird, um ein Abnahmedrehmoment (Cs) des Motorbetriebszustandes zu liefern.

8. Kraftfahrzeug nach Anspruch 7, **dadurch gekennzeichnet, dass** das Abnahmedrehmoment (Cs) des Motorbetriebszustandes von der Steuereinheit (22) so festgelegt ist, dass die Dauer des Abnahmeschritts des Motorbetriebszustandes im wesentlichen gleich einer vorgegebenen Dauer ist.

9. Kraftfahrzeug nach einem der Ansprüche 7 oder 8 in Kombination mit einem der Ansprüche 3 bis 6, **dadurch gekennzeichnet, dass** der Schritt der Abnahme des Motorbetriebszustandes beginnt, wenn das Einlegen des neuen Ganges erfasst wird.

10. Fahrzeug nach einem beliebigen der Ansprüche 7 bis 9, **dadurch gekennzeichnet, dass** der Wert des Abnahmedrehmoments (Cs) des Motorbetriebszustandes ein während des Schrittes der Abnahme des Motorbetriebszustandes konstanter Wert ist.

11. Kraftfahrzeug nach einem beliebigen Ansprüche 7 bis 9, **dadurch gekennzeichnet, dass** der wert des Abnahmedrehmoments (Cs) des Motorbetriebszustandes ein Wert ist, der von dem vom Fahrer verlangten Wert des Drehmoments abhängt.

12. Kraftfahrzeug nach einem der vorigen Ansprüche, **dadurch gekennzeichnet, dass** die Steuereinheit (22) des Schaltgetriebes (16) die vom Gaspedal gelieferte Drehmomentanforderungsinformation (24) empfängt, dass die Drehmo-mentanforderungsinformation von der Steuereinheit mit einem Maximal-Drehmomentwert (CMAXt) verglichen wird, und dass, wenn die Drehmomentanforderung über dem maximalen Drehmomentwert (CMAXt) während einer vorgegebenen Zeitdauer bleibt, die Steuereinheit (22) des Schaltgetriebes (16) an die Führungseinheit (20) des Motors (10) einen Führungsbefehl sendet, demzufolge der Motor geführt wird, um ein Drehmoment gleich dem maximalen Drehmomentwert (CMAXt) zu liefern.

13. Kraftfahrzeug nach einem beliebigen der vorhergehenden Ansprüche, **dadurch gekennzeichnet, dass** die Steuereinheit (22) des Schaltgetriebes (16) die vom Gaspedal (24) gelieferte Drehmomentanforderungsinformation empfängt, dass die Drehmomentanforderungsinformation von der Steuereinheit (22) mit einem maximalen Drehmomentwert (CMAXt) verglichen wird, und dass, wenn die Drehmomentanforderung größer als der maximale Drehmomentwert (CMAXt) wird, die Steuereinheit (22) des Schaltgetriebes (16) an die Führungseinheit (20) des Motors (10) einen Führungsbefehl sendet, demzufolge der Motor geführt wird, um ein Drehmoment gleich dem maximalen Drehmomentwert (CMAXt) zu liefern, ausgenommen im Fall einer plötzlichen Zunahme der Drehmomentanforderung (Cc).

14. Kraftfahrzeug nach Ansprüchen 12 und 13 in Kombination, **dadurch gekennzeichnet, dass** im Fall einer plötzlichen Zunahme der Drehmomentanforderung (Cc), in deren Verlauf die Drehmomentanforderung größer als der maximale Drehmoment (CMXt) wird, die Steuereinheit (22) des Getriebes (16) an die Führungseinheit (20) des Motors (10) einen Führungsbefehl sendet, demzufolge der Motor geführt wird, um ein Drehmoment zu liefern, das größer als der maximale Drehmomentwert (CMAXt) ist, und dass, wenn nach einer vorgegebenen Dauer die Drehmomentanforderung über dem maximalen Drehmomentwert (CMAXt) bleibt, die Steuereinheit (22) des Getriebes (16) an die Führungseinheit (20) des Motors (10) einen neuen Führungsbefehl sendet, demzufolge der Motor geführt wird, um ein Drehmoment gleich dem maximalen Drehmomentwert (CMAXt) zu liefern.

15. Kraftfahrzeug nach einem beliebigen der Ansprüche 12 bis 14, **dadurch gekennzeichnet, dass** der maximale Drehmomentwert (CMAXt) einem maximal zulässigen Drehmoment für ein Übertragungsorgan des Fahrzeugs entspricht.

16. Kraftfahrzeug nach einem beliebigen der vorhergehenden Ansprüche, **dadurch gekennzeichnet, dass** das Schaltgetriebe (16) mit dem Motor (10) über einen hydraulischen Drehmomentwandler (18) verbunden ist, der überbrückbar ist, und dass bei der Überbrückung des Wandlers (18) die Steuereinheit (22) des Schaltgetriebes (16) an die Führungseinheit des Motors einen Führungsbefehl sendet, demzufolge dieser kein Drehmoment oberhalb eines maximalen Überbrückungsmoments liefern kann.

17. Kraftfahrzeug nach einem beliebigen der vorhergehenden Ansprüche, **dadurch gekennzeichnet, dass** die Gänge des Schaltgetriebes (16) durch den offenen oder geschlossenen Zustand von Reibkupplungen festgelegt sind, und dass beim Einlegen eines Gangs die Steuereinheit (22) des Schaltgetriebes (16) an die Führungseinheit des Motors einen Führungsbefehl sendet, demzufolge dieser kein Drehmoment oberhalb eines maximalen Eingriffmoments liefern kann.
